# FASCICULE DE BREVET EUROPEEN

(11) **EP 3 883 125 B1**
(45) Date de publication et mention de la délivrance du brevet: **11.06.2025**
(21) Numéro de dépôt: 21162818.5
(22) Date de dépôt: 16.03.2021
(51) Int. Cl.: H02P 25/18, H02P 27/08, H02P 27/14, B61C 3/00

(54) **CIRCUIT D'ENTRAÎNEMENT DE TRACTION ET PROCÉDÉ DE PILOTAGE D'UN TEL CIRCUIT**
TRAKTIONSANTRIEBSSCHALTUNG UND VERFAHREN ZUM STEUERN EINER SOLCHEN SCHALTUNG
TRACTION DRIVING CIRCUIT AND METHOD FOR CONTROLLING SUCH A CIRCUIT

(30) Priorité: 16.03.2020 FR 2002540
(43) Date de publication de la demande: 22.09.2021
(73) Titulaire: ALSTOM Holdings, 93400 Saint-Ouen-sur-Seine (FR)
(72) Inventeur: DEHGHANIKIADEHI, Abbas, 65000 TARBES (FR); DESPORTES, Guillaume, 32730 HAGET (FR)
(74) Mandataire: Lavoix

(56) Documents cités:
- WO-A1-2019/186631
- US-A1- 2005 231 152
- US-A1- 2011 181 219
- US-A1- 2013 271 056
- US-A1- 2019 372 500

## Description

La présente invention concerne le domaine des circuits d'entraînement de traction comprenant un moteur, un module à double onduleurs adapté pour délivrer une tension pour alimenter le moteur et comprenant un premier onduleur et un deuxième onduleur.

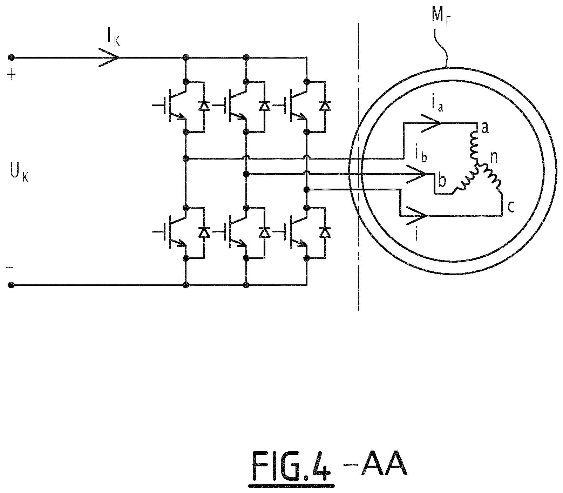

On connaît, tel que représenté en figure 4, des circuits d'entraînement de traction comprenant un seul onduleur couplé à un moteur fermé M_{F} formant un point étoile.

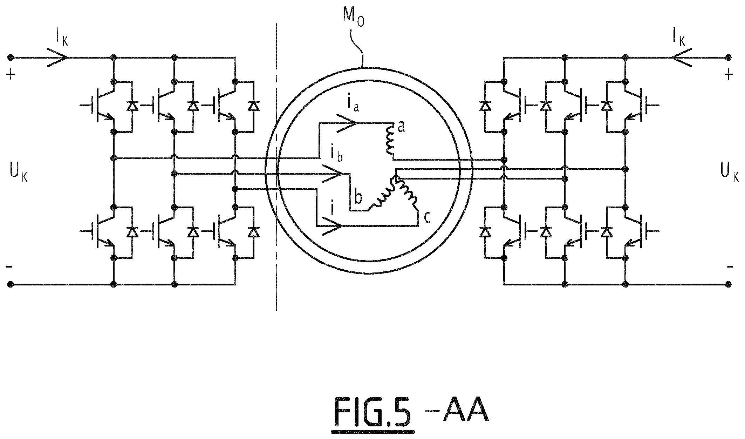

On connaît également, tel que représenté en figure 5, les circuits d'entraînement de traction comprenant un double onduleur couplé à un moteur ouvert Mo.

L'intérêt d'utiliser un double onduleur avec moteur ouvert par rapport à un seul onduleur avec moteur fermé permet de pouvoir jouer sur les pertes électriques dues aux onduleurs et les pertes électriques dues aux harmoniques du moteur.

Les documents US2005/231152 A1, WO 2019/186631 A1, US 2011/181219 A1, US 2013/271056 A1 et US 2019/372500 A1 divulguent des circuits d'entrainement de traction et des procédés de pilotage associés.

Le but de l'invention est alors de proposer une solution qui contribue à réduire encore davantage les pertes dans les circuits d'entraînement de traction comprenant un double onduleur couplé à un moteur ouvert. A cet effet, suivant un premier aspect, l'invention propose un circuit d'entraînement de traction du type précité caractérisé en ce qu'il comporte un bloc de commutation et un bloc de contrôle, dans lequel le bloc de commutation est adapté pour commuter le circuit d'entraînement d'un mode à l'autre parmi un premier et deuxième modes de fonctionnement ; et
le bloc de contrôle est adapté pour déterminer la valeur courante de la tension à fournir par le module à double onduleur, pour comparer la valeur courante de ladite tension à un seuil, et pour, en fonction de la comparaison, commander au bloc de commutation de commuter du mode opérationnel courant parmi les premier et deuxième modes vers l'autre mode opérationnel parmi les premier et deuxième modes ; dans lequel :
dans le premier mode opérationnel du circuit d'entraînement, le deuxième onduleur est déconnecté du moteur, et le premier onduleur est connecté au moteur adapté pour alors former un point étoile ; et
dans le deuxième mode opérationnel du circuit d'entraînement, le premier onduleur et le deuxième onduleur sont connectés au moteur adapté alors pour fonctionner en moteur à extrémité ouverte.

L'invention permet ainsi de réduire la perte d'énergie.

Dans des modes de réalisation, le circuit d'entraînement suivant l'invention comporte en outre une ou plusieurs des caractéristiques suivantes :
- le moteur comprend un ensemble de phase(s) comprenant plusieurs phases comprenant chacune des bobines disposées en série, et dans ledit premier mode opérationnel, lesdites phases sont connectées en point étoile et dans le deuxième mode, lesdites phases sont disposées en extrémités ouvertes ;
- le bloc de contrôle est adapté pour si le mode opérationnel courant est le premier mode et que ladite valeur de tension est supérieure audit seuil, commander au bloc de commutation de commuter du premier mode au deuxième mode ;
- le bloc de contrôle est adapté pour si le mode opérationnel courant est le deuxième mode et que ladite valeur de tension est inférieure audit seuil, commander au bloc de commutation de commuter du deuxième mode au premier mode ;
- des première, deuxième et troisième phases du moteur sont connectés au deuxième onduleur, et le bloc de commutation comprend au moins deux commutateurs adaptés pour dans le premier mode être fermés et connecter entre elle une première phase du moteur et une deuxième phase du moteur et pour connecter entre elles la deuxième phase et une troisième phase du moteur dans le premier mode de fonctionnement, et dans lequel dans le deuxième mode de fonctionnement, lesdits commutateurs sont adaptés pour être ouverts et déconnecter la première phase de la deuxième phase, la deuxième phase de la troisième phase ;
- dans un premier mode opérationnel du circuit d'entraînement, le module à double onduleur est adapté pour déconnecter le deuxième onduleur du moteur, pour connecter le premier onduleur au moteur adapté pour alors former un point étoile.

Suivant un deuxième aspect, la présente invention propose un procédé de pilotage d'un circuit d'entrainement de traction comprenant un moteur, un module à double onduleurs comprenant un premier onduleur et un deuxième onduleur, ledit procédé comprenant une étape de délivrance d'une tension par le module à double onduleurs pour alimenter le moteur ;
ledit procédé étant caractérisé en ce qu'il comporte les étapes, mises en œuvre par un dispositif électronique de pilotage du circuit d'entraînement, de :
- détermination de la valeur courante de la tension à fournir par le module à double onduleur,
- comparaison de la valeur courante de ladite tension à un seuil,
- commande, en fonction de la comparaison, d'une commutation du mode opérationnel courant parmi un premier et deuxième modes de fonctionnement vers l'autre mode opérationnel parmi les premier et deuxième modes ; selon lequel
   dans le premier mode opérationnel du circuit d'entraînement, le deuxième onduleur est déconnecté du moteur, et le premier onduleur est connecté au moteur adapté pour alors former un point étoile ; et
   dans le deuxième mode opérationnel du circuit d'entraînement, le premier onduleur et le deuxième onduleur sont connectés au moteur adapté alors pour fonctionner en moteur à extrémité ouverte.

Dans des modes de réalisation, le procédé suivant l'invention comporte en outre une ou plusieurs des caractéristiques suivantes :
- le moteur comprend un ensemble de phase(s) comprenant une ou plusieurs phases comprenant chacune des bobines disposées en série, et comprenant les étapes suivantes :
   - dans ledit premier mode opérationnel, connexion desdites phases en point étoile; et
   - dans le deuxième mode, disposition desdites phases en extrémités ouvertes.
- si le mode opérationnel courant est le premier mode et que ladite valeur de tension est supérieure audit seuil, une commande de commutation du premier mode au deuxième mode est déclenchée ;
- si le mode opérationnel courant est le deuxième mode et que ladite valeur de tension est inférieure audit seuil, une commande de commutation du deuxième mode au premier mode est déclenchée.

Ces caractéristiques et avantages de l'invention apparaîtront à la lecture de la description qui va suivre, donnée uniquement à titre d'exemple, et faite en référence aux dessins annexés, sur lesquels :
[Fig 1] la figure 1 représente une vue d'un circuit électrique d'entraînement de traction dans un mode de réalisation de l'invention ;
[Fig 2] la figure 2 est une vue d'un graphe représentant le mode de fonctionnement d'un circuit d'entraînement selon un mode de réalisation l'invention en fonction de la tension du moteur ;
[Fig 3] la figure 3 est un organigramme d'étapes mises en œuvre dans un mode de réalisation de l'invention ;
[Fig 4] la figure 4 est une vue schématique d'un circuit d'entraînement avec moteur fermé et un onduleur dans l'art antérieur ;
[Fig 5] la figure 5 est une vue schématique d'un circuit d'entraînement avec moteur ouvert et deux onduleurs dans l'art antérieur ;
[Fig 6] la figure 6 est une vue schématique d'un circuit d'entraînement selon l'invention en mode OP1 avec bobinages en série ;
[Fig 7] la figure 7 est une vue schématique d'un circuit d'entraînement en mode OP2 avec bobinages en série.

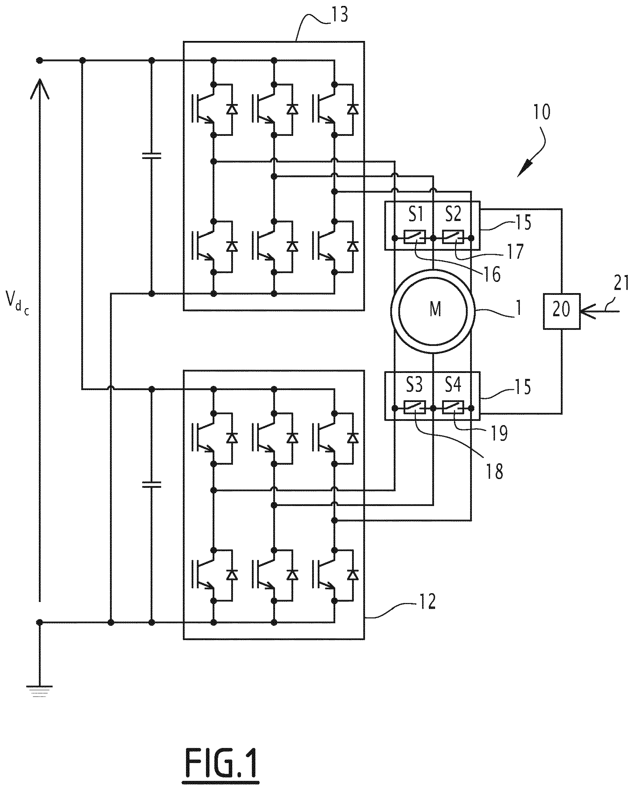

La figure 1 représente schématiquement un circuit électrique 10 d'entraînement de traction dans un mode de réalisation de l'invention, au sein de la chaîne de traction d'un engin mobile.

Le circuit 10 d'entraînement de traction est par exemple embarqué dans une locomotive de train ou plus généralement dans une voiture de train équipée d'un bogie moteur. Dans d'autres modes de réalisation, il est embarqué dans la voiture de traction d'un tramway, d'un métro, d'un bus électrique.

Le circuit 10 d'entraînement de traction comporte de façon connue deux onduleurs 12 et 13, raccordés chacun à un côté respectif d'un moteur ouvert 1, via des enroulements de stator.

Selon l'invention, le circuit 10 d'entraînement de traction comporte en outre un bloc de contrôle 20.

Les deux onduleurs 12, 13 sont pilotés par le bloc de contrôle 20. Dans le cas considéré, le moteur 1 est un moteur triphasé ; chacune des trois phases d'alimentation du moteur 1 interfacées avec l'onduleur 12, respectivement 13, est connectée avec un bras respectif de cet onduleur 12, 13 comme représenté sur la figure 1.

Une tension d'alimentation Vdc est appliquée en entrée des bornes d'entrée de chacun des onduleurs 12, 13. La tension d'alimentation est continue et figure, par exemple, dans la plage 1000 à 3000 Volts.

Des formes d'ondes découpées sont fournies depuis la sortie des onduleurs au moteur, alimentant ainsi le moteur. Des commandes, par exemple de type Modulation de Largeur d'Impulsion, sont utilisées.

Selon l'invention, le circuit 10 d'entraînement de traction comporte en outre un bloc de commutation 15.

Le bloc de commutation 15 comprend dans le mode considéré un premier ensemble de commutateurs 16, 17, nommés respectivement S1 et S2 et un deuxième ensemble de commutateurs 18, 19, nommés respectivement S3 et S4.

Le bloc de commutation 15 est adapté pour déclencher la fermeture ou l'ouverture de l'ensemble de commutateurs S1, S2 et pour déclencher la fermeture ou l'ouverture de l'ensemble de commutateurs S3, S4.

Le bloc de commutation 15 est adapté pour, suite à la réception en provenance du bloc de contrôle 20, d'une commande de passage dans un premier mode opérationnel du circuit d'entraînement nommé OP1 :
- fermer chacun des commutateurs de l'ensemble de commutateurs S1, S2 tandis que chacun des commutateurs de l'ensemble de commutateurs S3, S4 est maintenu ouvert ; ou
- fermer chacun des commutateurs de l'ensemble de commutateurs S3, S4, tandis que chacun des commutateurs de l'ensemble de commutateurs S1, S2 est maintenu ouvert.

Le bloc de commutation 15 est adapté pour, suite à la réception en provenance du bloc de contrôle 20, d'une commande de passage dans un deuxième mode opérationnel du circuit d'entraînement nommé OP2, ouvrir chaque commutateur S1, S2, S3, S4.

Ainsi dans le premier mode opérationnel OP1, chaque commutateur S1, S2 est maintenu fermé par le bloc de commutation 15 tandis que chaque commutateur S3, S4 est maintenu ouvert par le bloc de commutation 15 (ou alors chaque commutateur S1, S2 est maintenu ouvert tandis que chaque commutateur S3, S4 est maintenu fermé), plaçant le moteur 1 en montage étoile fermé, de la manière générale commentée plus haut en référence à la figure 4.

Dans le deuxième mode opérationnel OP2, chaque commutateur S1, S2, S3, S4 est maintenu ouvert par le bloc de commutation 15, le moteur 1 fonctionne alors en moteur ouvert, de la manière générale commentée plus haut en référence à la figure 5.

Le bloc de contrôle 20 est adapté pour surveiller la valeur courante de la tension V du moteur 1.

On entend ici par tension V du moteur 1, la tension à délivrer aux bornes du moteur 1, estimée par le bloc 20. Cette tension V sera à fournir, par un, ou les, onduleurs 12, 13 et est déterminée par le bloc de contrôle 20 et est par exemple fonction du niveau de tension nécessaire qui dépend : du point de fonctionnement vitesse du moteur 1, de l'effort à réaliser par le moteur tel que défini par une consigne 21 de Traction et ou de Freinage, et de la tension d'alimentation Vdc (dans des modes de réalisation, seuls certains de ces facteurs comptent dans la détermination de la tension V).

On entend ici par consigne 21 de Traction ou Freinage, la consigne d'effort généralement définie par le conducteur de l'engin, ou par un système de régulation automatique de la vitesse par exemple.

Le bloc de contrôle 20 est adapté pour, en fonction de la valeur courante du paramètre de tension surveillé V, commander au bloc de commutation 15 de commuter du mode opérationnel courant parmi OP1, OP2 à l'autre mode opérationnel parmi OP1, OP2 et pour piloter les onduleurs 12 et 13.

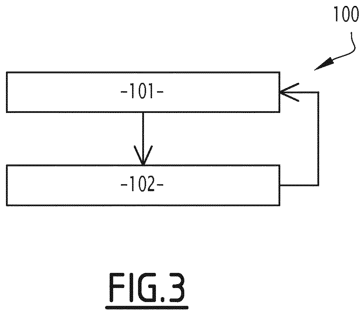

Dans un mode de réalisation, le bloc de contrôle 20 comprend une mémoire et un microprocesseur (non représentés sur les figures), la mémoire comprend des instructions logicielles qui lorsqu'elles sont exécutées sur le microprocesseur donnent lieu aux opérations mises en œuvre par le bloc de contrôle 20 décrites ci-dessous en référence à la figure 3.

En référence à l'ensemble 100 d'étapes représenté en figure 3 et réitéré régulièrement, par exemple tous les périodes T, avec T comprise dans la plage 20 à 100 ms, dans une étape 101, le bloc de contrôle 20 détermine la valeur courante de la tension V du moteur 1 et le mode opérationnel courant du circuit d'entraînement de traction 10 parmi le mode OP1 et le mode OP2.

Puis le bloc de contrôle 20 compare la valeur courante déterminée de la tension V à un seuil de tension V_{L}.

Ce seuil de tension V_{L} (tension maximale disponible par onduleur) dépend de la tension d'alimentation. Dès que la tension V est déterminée supérieure au seuil V_{L} et si le mode opérationnel courant est le mode OP1, alors le bloc de contrôle 20 commande au bloc de commutation 15 de commuter du mode opérationnel courant OP1 au mode opérationnel OP2. Dès que la tension V est déterminée inférieure au seuil V_{L} et si le mode opérationnel courant est le mode OP2, alors le bloc de contrôle 20 commande au bloc de commutation 15 de commuter du mode opérationnel courant OP2 au mode opérationnel OP1.

Dans une étape 102, dès que le bloc de commutation 15 reçoit une commande de changement de mode opérationnel du bloc de contrôle 20, il effectue les changements de configuration nécessaires pour faire basculer le circuit d'entraînement de traction 10 dans le nouveau mode opérationnel commandé, notamment il commande les ouvertures ou fermetures nécessaires d'interrupteurs S1, S2, S3, S4. Le deuxième onduleur est en outre activé ou désactivé par le bloc de contrôle 20 en conséquence de la configuration réalisée par le bloc 15.

Dans un mode de réalisation, à chaque nouveau basculement vers le mode OP1 en circuit fermé, le bloc de commutation 15 sélectionne l'ensemble d'interrupteurs à fermer parmi les ensembles (S1, S2), (S3, S4) tel que cet ensemble est différent de l'ensemble fermé dans le précédent basculement vers le mode OP1 (dans un autre mode de réalisation, cette alternance est gérée par le bloc de contrôle 20 qui indique alors dans sa commande de passage au mode OP1, quel est l'ensemble de commutateurs à fermer).

Par exemple la valeur du seuil V_{L} est comprise dans la plage de 450 à 900 Volts suivant la tension d'alimentation Vdc disponible (soit généralement 1/2 de la tension maximale du moteur).

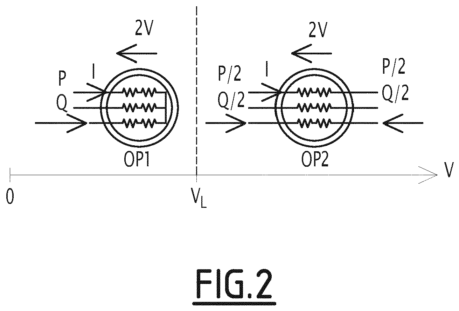

En figure 2, les deux modes sont illustrés dans un graphe comportant l'axe de tension V.

Ainsi considérons un démarrage d'un train dont le circuit d'entraînement met en œuvre l'invention. Le moteur ne demande pas de haute tension à vitesse basse. Le mode opérationnel va être d'abord le mode OP1 : selon l'invention, un seul onduleur est lancé et un point étoile du moteur 1 est réalisé de façon externe au moteur 1 par les commutateurs S1-S2 (ou S3-S4) ; cette approche élimine les pertes par conduction et commutation dues à l'autre onduleur, ce dernier étant désactivé. Dans ce mode OP1, les pertes par conduction sont divisées par deux (en comparaison à l'utilisation de deux onduleurs). En cas de dysfonctionnement d'onduleur, l'entraînement en traction peut opérer à demi-puissance ; grâce au bloc de commutation et aux semi-conducteurs isolés des onduleurs, la solution augmente la disponibilité de la chaîne de puissance.

Le seuil de tension considéré pour le basculement de OP1 vers OP2 peut être différent de celui considéré pour le basculement de OP2 vers OP1, dans un mode de réalisation, et/ou des conditions supplémentaires peuvent être considérées (par exemple pas de basculement si le dernier basculement a eu lieu il y a moins d'un délai minimal Dmin, ou par exemple la considération de basculement sur un hystérésis OP1 ←→ OP2 de l'ordre 5% du seuil nominal) .

L'invention permet ainsi de réduire les pertes en puissance du circuit 10 d'entraînement de traction. Elle permet donc aussi de réduire l'échauffement ce qui permet en outre une simplification du système de refroidissement.

Dans le mode de réalisation décrit, chacun des deux onduleurs 12, 13 est rendu inactif, successivement, dans le mode OP1. Dans un autre mode de réalisation, on rend inactif toujours le même onduleur lors de basses valeurs de vitesse (ou de tension), et dans ce cas seul l'ensemble de commutateurs utilisé pour cet onduleur est mis en œuvre selon l'invention.

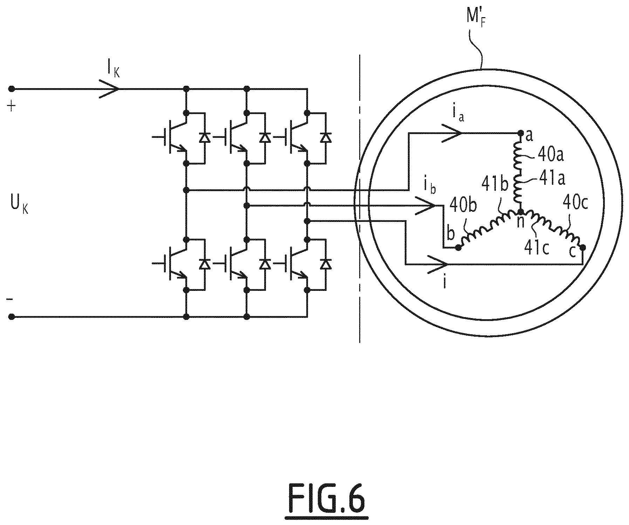

Dans un mode de réalisation, dans le mode OP1, en référence à la figure 6, le moteur est en configuration montage étoile fermé M'_{F} et relié à un seul des onduleurs 12, 13 et chaque phase de l'ensemble des phases du moteur (ici au nombre de trois) comprend au moins deux bobinages disposés en série: ainsi les bobinages 40ₐ et 41ₐ sont disposés en série sur une des phases, idem pour les bobinages 40_{b} et 41_{b}, respectivement les bobinages 40_{c} et 41_{c}.

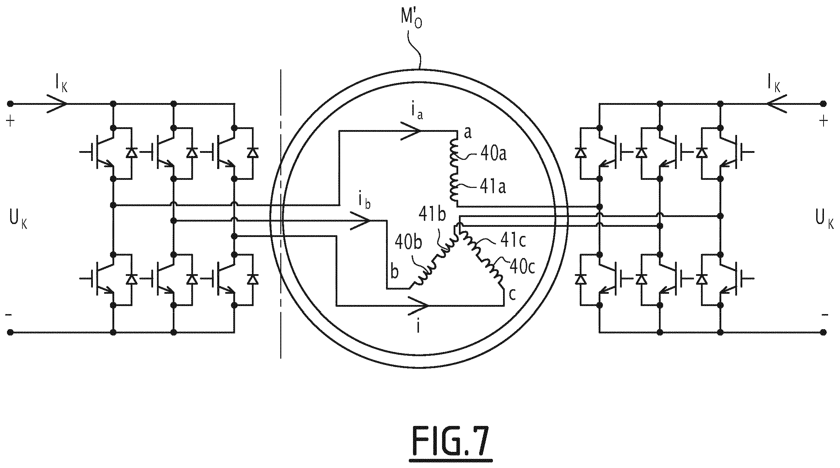

Et, dans ce mode de réalisation, dans le mode OP2, en référence à la figure 7, le moteur est en configuration ouverte M'ₒ et relié à chacun des onduleurs 12, 13 et la configuration de chaque phase de l'ensemble des phases du moteur (ici au nombre de trois) comprend au moins deux bobinages disposés en série : ainsi les bobinages 40ₐ et 41ₐ sont disposés en série sur une des phases, idem pour les bobinages 40_{b} et 41_{b}, respectivement les bobinages 40_{c} et 41_{c}.

Le changement des configurations des bobinages (point étoile ou extrémités ouvertes) lors des changements de mode opérationnel entre OP1 et OP2 est effectué par le bloc de commutation 15 sous le pilotage du bloc de contrôle 20.

De ce fait, dans ce dernier mode de réalisation de l'invention, le courant « nominal » du moteur est alors divisé par 2. Le moteur 1 continuera à fournir les mêmes performances (couple, puissance, vitesse).

Dans le cas du bobinage du moteur en série conduisant à un courant nominal moteur divisé par deux, les calibres en courant des onduleurs 12, 13 (surface des puces semiconducteurs) seront également divisés par deux. Le calibre global en courant du double onduleur reste alors identique à celui du simple onduleur. Les pertes par conduction du double onduleur restent alors identiques à celles du simple onduleur.

Si le moteur 1 n'est pas bobiné en série avec la structure du double onduleur (dans l'art antérieur, les bobinages dans chaque phase d'un double onduleur du type représenté en figure 5 sont disposés en parallèle ; les bobinages dans chaque phase d'un unique onduleur du type représenté en figure 4 sont par exemple également disposés classiquement en parallèle ou en série selon le type d'onduleur) alors le courant dans les deux onduleurs ne sera pas divisé par deux. Les pertes par conduction des deux onduleurs seront alors doublées par rapport à celles du simple onduleur : si on minimise au maximum les pertes onduleurs, on retrouve les mêmes pertes harmoniques au niveau du moteur ; si on minimise au maximum les pertes harmoniques au niveau du moteur, on retrouvera les mêmes pertes au niveau des onduleurs. Il est possible ensuite de faire varier les pertes onduleurs et les pertes harmoniques à l'intérieur de ces courbes minimales et maximales.

D'une manière très macroscopique, les diminutions de pertes harmoniques ou onduleur sont liées au fait que le moteur voit toujours le double de la fréquence de découpe onduleur (fréquence FSW) et que le fait d'utiliser deux onduleurs peut potentiellement diviser la fréquence FSW par deux. Les pertes par commutation du double onduleur sont divisées par deux dans le cas d'un moteur bobiné en série.

Donc, pour un moteur bobiné en série en mode OP2, soit les pertes harmoniques au niveau du moteur sont conservées et les pertes de commutation de l'ensemble des onduleurs sont divisées par deux par rapport au cas d'un moteur fermé et les pertes par conduction sont conservées, tout cela pour une même puissance électrique et couple au niveau du moteur ; soit les pertes onduleurs (pertes par commutation identiques et pertes par conduction identique au cas d'un moteur fermé) sont conservées et les pertes harmoniques sont diminuées.

Selon un mode de réalisation non illustré, le moteur est un moteur biphasé comprenant une première et une deuxième phases.

Dans le premier mode opérationnel OP1, la première et la deuxième phases dudit moteur biphasé sont connectées entre elles, formant ainsi un point étoile. La première phase est également connectée à un bras d'un des premier et deuxième onduleurs 12,13 et la deuxième phase est également connectée à un autre bras d'un des premier et deuxième onduleurs onduleur 12,13. L'autre des premier et deuxième onduleurs 12,13 est déconnecté du moteur.

Dans le deuxième mode opérationnel OP2, la première et la deuxième phases dudit moteur biphasé sont déconnectées l'une de l'autre. Le moteur fonctionne alors en moteur à extrémité ouverte. Chacune des deux phases est connectée d'une part à un bras du premier onduleur 12 et d'autre part à un bras du deuxième onduleur 13.

Dans ce mode de réalisation également un bloc de commutation est adapté pour commuter d'un mode opérationnel à l'autre, sous la commande d'un bloc de contrôle. Par exemple dans ce mode de réalisation, le bloc de commutation comprend un premier commutateur et un deuxième commutateur. Dans le premier mode opérationnel OP1, le bloc de contrôle commande la fermeture du premier commutateur et l'ouverture du deuxième commutateur (ou vice-versa l'ouverture du premier commutateur et la fermeture du deuxième commutateur). Dans le deuxième mode opérationnel OP2, le bloc de contrôle commande l'ouverture du premier et du deuxième commutateur.

## Revendications

1. Circuit d'entraînement de traction (10) comprenant un moteur (1), et un module à double onduleurs (12, 13) adapté pour délivrer une tension (V) pour alimenter le moteur et comprenant un premier onduleur (12) et un deuxième onduleur (13),
ledit circuit d'entraînement étant **caractérisé en ce qu'**il comporte un bloc de commutation (15) et un bloc de contrôle (20), dans lequel le bloc de commutation est adapté pour commuter le circuit d'entraînement d'un mode à l'autre parmi un premier (OP1) et deuxième (OP2) modes opérationnels ; et
le bloc de contrôle (20) est adapté pour déterminer la valeur courante de la tension à fournir par le module à double onduleur, pour comparer la valeur courante de ladite tension à un seuil (V_{L}), et pour, en fonction de la comparaison, commander au bloc de commutation (15) de commuter du mode opérationnel courant parmi les premier et deuxième modes vers l'autre mode opérationnel parmi les premier et deuxième modes ; dans lequel :
dans le premier mode opérationnel (OP1) du circuit d'entraînement, l'un des premier et deuxième onduleurs (13) est déconnecté du moteur, et l'autre des premier et deuxième onduleurs (12) est connecté au moteur (1) adapté pour alors former un point étoile ; et
dans le deuxième mode opérationnel (OP2) du circuit d'entraînement, le premier onduleur et le deuxième onduleur sont connectés au moteur adapté alors pour fonctionner en moteur à extrémité ouverte, les phases du moteur étant déconnectées les unes des autres ;
dans lequel à chaque nouveau basculement vers le premier mode opérationnel (OP1), le bloc de commutation est propre à déconnecter du moteur un onduleur, choisi parmi les premier et deuxième onduleurs, différent de celui déconnecté du moteur lors d'un précédent basculement vers le premier mode opérationnel.

2. Circuit d'entraînement de traction (10) selon la revendication 1, dans lequel le moteur (1) comprend un ensemble de phase(s) comprenant une ou plusieurs phases comprenant chacune des bobines disposées en série, et dans ledit premier mode opérationnel (OP1), lesdites phases sont connectées en point étoile et dans le deuxième mode opérationnel (OP2), lesdites phases sont disposées en extrémités ouvertes.

3. Circuit d'entraînement de traction (10) selon la revendication 1 ou 2, dans lequel le bloc de contrôle (20) est adapté pour si le mode opérationnel courant est le premier mode (OP1) et que ladite valeur de tension (V) est supérieure audit seuil (V_{L}), commander au bloc de commutation (15) de commuter du premier mode au deuxième mode (OP2).

4. Circuit d'entraînement de traction (10) selon l'une des revendications précédentes, dans lequel le bloc de contrôle (20) est adapté pour si le mode opérationnel courant est le deuxième mode (OP2) et que ladite valeur de tension (V) est inférieure audit seuil (V_{L}), commander au bloc de commutation (15) de commuter du deuxième mode au premier mode.

5. Circuit d'entraînement de traction (10) selon l'une des revendications précédentes, dans lequel des première, deuxième et troisième phases du moteur (1) sont connectés au deuxième onduleur (13), et le bloc de commutation comprend au moins deux commutateurs (S3, S4) adaptés pour, dans le premier mode, être fermés et connecter entre elles la première phase du moteur et la deuxième phase du moteur, respectivement la deuxième phase et la troisième phase du moteur, et dans lequel, dans le deuxième mode de fonctionnement (OP2), lesdits commutateurs sont adaptés pour être ouverts et déconnecter la première phase de la deuxième phase, respectivement la deuxième phase de la troisième phase.

6. Procédé de pilotage d'un circuit d'entrainement de traction comprenant un moteur (1), un module à double onduleurs (12, 13) comprenant un premier onduleur (12) et un deuxième onduleur (13), ledit procédé comprenant une étape de délivrance d'une tension (V) par le module à double onduleurs pour alimenter le moteur ;
ledit procédé étant **caractérisé en ce qu'**il comporte les étapes, mises en œuvre par un dispositif électronique de pilotage du circuit d'entraînement, de :
- détermination de la valeur courante de la tension à fournir par le module à double onduleurs,
- comparaison de la valeur courante de ladite tension à un seuil (VL),
- commande, en fonction de la comparaison, d'une commutation du mode opérationnel courant parmi un premier (OP1) et deuxième (OP2) modes de fonctionnement vers l'autre mode opérationnel parmi les premier et deuxième modes ; selon lequel
dans le premier mode opérationnel (OP1) du circuit d'entraînement, l'un des premier et deuxième onduleurs (13) est déconnecté du moteur, et l'autre des premier et deuxième onduleurs (12) est connecté au moteur (1) adapté pour alors former un point étoile ; et
dans le deuxième mode opérationnel (OP2) du circuit d'entraînement, le premier onduleur et le deuxième onduleur sont connectés au moteur adapté alors pour fonctionner en moteur à extrémité ouverte, les phases du moteur étant déconnectées les unes des autres ;
dans lequel à chaque nouveau basculement vers le premier mode opérationnel (OP1), le bloc de commutation est propre à déconnecter du moteur un onduleur, choisi parmi les premier et deuxième onduleurs, différent de celui déconnecté du moteur lors d'un précédent basculement vers le premier mode opérationnel.

7. Procédé de pilotage d'un circuit d'entrainement de traction selon la revendication 6, selon lequel le moteur (1) comprend un ensemble de phase(s) comprenant une ou plusieurs phases comprenant chacune des bobinages disposés en série, et comprenant les étapes suivantes :
- dans ledit premier mode opérationnel, connexion desdites phases en point étoile; et
- dans le deuxième mode, disposition desdites phases en extrémités ouvertes.

8. Procédé de pilotage d'un circuit d'entrainement de traction selon la revendication 6 ou 7, selon lequel, si le mode opérationnel courant est le premier mode (OP1) et que ladite valeur de tension (V) est supérieure audit seuil (VL), une commander de commutation du premier mode au deuxième mode (OP2) est déclenchée.

9. Procédé de pilotage d'un circuit d'entrainement de traction selon l'une des revendications 6 à 8, selon lequel, si le mode opérationnel courant est le deuxième mode (OP2) et que ladite valeur de tension (V) est inférieure audit seuil (V_{L}), une commande de commutation du deuxième mode au premier mode est déclenchée.

## Patentansprüche

1. Traktionsantriebsschaltung (10), umfassend einen Motor (1), und einem Doppelwechselrichtermodul (12, 13), das angepasst ist, um eine Spannung (V) zur Versorgung des Motors zuzuführen, und umfassend einen ersten Wechselrichter (12) und einen zweiten Wechselrichter (13), wobei die Antriebsschaltung **dadurch gekennzeichnet ist, dass** sie einen Schaltblock (15) und einen Steuerblock (20) umfasst, wobei der Schaltblock angepasst ist, um die Antriebsschaltung von einem ersten (OP1) und einem zweiten (OP2) Betriebsmodus in den anderen zu schalten; und der Steuerblock (20) angepasst ist, um den aktuellen Wert der Spannung, die von dem Doppelwechselrichtermodul bereitzustellen ist, zu bestimmen, um den aktuellen Wert der Spannung mit einem Schwellenwert (V_{L}) zu vergleichen, und um abhängig von dem Vergleich den Schaltblock (15) zu steuern, von dem aktuellen Betriebsmodus aus dem ersten und dem zweiten Modus in den anderen Betriebsmodus aus dem ersten und dem zweiten Modus zu schalten; wobei:
in dem ersten Betriebsmodus (OP1) der Antriebsschaltung einer von dem ersten und dem zweiten Wechselrichter (13) von dem Motor getrennt ist und der andere von dem ersten und dem zweiten Wechselrichter (12) mit dem Motor (1) verbunden ist, der angepasst ist, um dann einen Sternpunkt zu bilden; und
in dem zweiten Betriebsmodus (OP2) der Antriebsschaltung der erste Wechselrichter und der zweite Wechselrichter mit dem Motor verbunden sind, der dann angepasst ist, um als Motor mit offenem Ende betrieben zu werden, wobei die Phasen des Motors voneinander getrennt sind;
wobei bei jedem neuen Umschalten auf den ersten Betriebsmodus (OP1) der Schaltblock angepasst ist, um einen Wechselrichter, der ausgewählt ist aus dem ersten und dem zweiten Wechselrichter, von dem Motor zu trennen, der sich von jenem unterscheidet, der bei einem vorherigen Umschalten auf den ersten Betriebsmodus von dem Motor getrennt wurde.

2. Traktionsantriebsschaltung (10) nach Anspruch 1, wobei der Motor (1) eine Phasenanordnung umfasst, umfassend eine oder mehrere Phasen, jeweils umfassend in Reihe angeordnete Spulen, und in dem ersten Betriebsmodus (OP1) die Phasen in Sternpunkt verbunden sind und in dem zweiten Betriebsmodus (OP2) die Phasen in offenen Enden angeordnet sind.

3. Traktionsantriebsschaltung (10) nach Anspruch 1 oder 2, wobei der Steuerblock (20) angepasst ist, um, wenn der aktuelle Betriebsmodus der erste Modus (OP1) ist und der Spannungswert (V) größer als der Schwellenwert (V_{L}) ist, den Schaltblock (15) zu steuern, um von dem ersten Modus in den zweiten Modus (OP2) umzuschalten.

4. Traktionsantriebsschaltung (10) nach einem der vorherigen Ansprüche, wobei der Steuerblock (20) angepasst ist, um, wenn der aktuelle Betriebsmodus der zweite Modus (OP2) ist und der Spannungswert (V) kleiner als der Schwellenwert (V_{L}) ist, den Schaltblock (15) zu steuern, um von dem zweiten Modus in den ersten Modus umzuschalten.

5. Traktionsantriebsschaltung (10) nach einem der vorherigen Ansprüche, wobei eine erste, eine zweite und eine dritte Phase des Motors (1) mit dem zweiten Wechselrichter (13) verbunden sind, und der Schaltblock mindestens zwei Schalter (S3, S4) umfasst, die angepasst sind, um in dem ersten Betriebsmodus geschlossen zu sein und die erste Phase des Motors und die zweite Phase des Motors bzw. die zweite Phase und die dritte Phase des Motors miteinander verbinden, und wobei in dem zweiten Betriebsmodus (OP2) die Schalter angepasst sind, um geöffnet zu sein und die erste Phase von der zweiten Phase bzw. die zweite Phase von der dritten Phase zu trennen.

6. Verfahren zur Steuerung einer Traktionsantriebsschaltung, umfassend einen Motor (1), ein Doppelwechselrichtermodul (12, 13), umfassend einen ersten Wechselrichter (12) und einen zweiten Wechselrichter (13), das Verfahren umfassend einen Schritt eines Zuführens einer Spannung (V) durch das Doppelwechselrichtermodul, um den Motor zu versorgen;
wobei das Verfahren **dadurch gekennzeichnet ist, dass** es die folgenden Schritte umfasst, die von einer elektronischen Vorrichtung zur Steuerung der Antriebsschaltung durchgeführt werden:
- Bestimmen des aktuellen Werts der Spannung, die vom Doppelwechselrichtermodul bereitgestellt werden soll,
- Vergleichen des aktuellen Werts der Spannung mit einem Schwellenwert (V_{L}),
- Steuern, basierend auf dem Vergleich, eines Umschaltens des aktuellen Betriebsmodus zwischen einem ersten (OP1) und einem zweiten (OP2) Betriebsmodus in den anderen Betriebsmodus aus dem ersten und zweiten Modus; wobei
in dem ersten Betriebsmodus (OP1) der Antriebsschaltung einer von dem ersten und dem zweiten Wechselrichter (13) von dem Motor getrennt ist und der andere von dem ersten und dem zweiten Wechselrichter (12) mit dem Motor (1) verbunden ist, der angepasst ist, um dann einen Sternpunkt zu bilden; und
in dem zweiten Betriebsmodus (OP2) der Antriebsschaltung der erste Wechselrichter und der zweite Wechselrichter mit dem Motor verbunden sind, der dann angepasst ist, um als Motor mit offenem Ende betrieben zu werden, wobei die Phasen des Motors voneinander getrennt sind;
wobei bei jedem neuen Umschalten auf den ersten Betriebsmodus (OP1) der Schaltblock angepasst ist, um einen Wechselrichter, der ausgewählt ist aus dem ersten und dem zweiten Wechselrichter, von dem Motor zu trennen, der sich von jenem unterscheidet, der bei einem vorherigen Umschalten auf den ersten Betriebsmodus von dem Motor getrennt wurde.

7. Verfahren zur Steuerung einer Traktionsantriebsschaltung nach Anspruch 6, wobei der Motor (1) eine Phasenanordnung umfasst, umfassend eine oder mehrere Phasen, jeweils umfassend in Reihe angeordnete Spulen, und umfassend die folgenden Schritte:
- in dem ersten Betriebsmodus, Verbinden der genannten Phasen in Sternpunkt; und
- in dem zweiten Modus, Anordnen der genannten Phasen in offenen Enden.

8. Verfahren zur Steuerung einer Traktionsantriebsschaltung nach Anspruch 6 oder 7, wobei, wenn der aktuelle Betriebsmodus der erste Modus (OP1) ist und der Spannungswert (V) größer ist als der Schwellenwert (V_{L}) ist, eine Steuerung zum Umschalten von dem ersten Modus in den zweiten Modus (OP2) ausgelöst wird.

9. Verfahren zur Steuerung einer Traktionsantriebsschaltung nach einem der Ansprüche 6 bis 8, wobei, wenn der aktuelle Betriebsmodus der zweite Modus (OP2) ist und der Spannungswert (V) unter dem Schwellenwert (V_{L}) ist, eine Steuerung zum Umschalten von dem zweiten Modus in den ersten Modus ausgelöst wird.

## Claims

1. A traction drive circuit (10) comprising a motor (1), and a dual inverter module (12, 13) adapted to supply a voltage (V) for powering the motor and comprising a first inverter (12) and a second inverter (13), said drive circuit being **characterised in that** it comprises a switching block (15) and a control block (20), wherein the switching block is adapted to switch the drive circuit from one mode to another between a first (OP1) and a second (OP2) operational mode; and
the control block (20) is adapted to determine the current value of the voltage to be supplied by the dual inverter module, to compare the current value of said voltage with a threshold (V_{L}), and depending on the comparison, to command the switching block (15) to switch from the current operational mode among the first and second modes to the other operational mode among the first and second modes; wherein:
in the first operational mode (OP1) of the drive circuit, one of the first and second inverters (13) is disconnected from the motor, and the other of the first and second inverters (12) is connected to the motor (1) adapted to then form a wye point; and
in the second operational mode (OP2) of the drive circuit, the first inverter and the second inverter are connected to the motor then adapted to operate as an open-ended motor, the phases of the motor being disconnected from each other;
wherein, upon each new switchover to the first operational mode (OP1), the switching unit is able to disconnect from the motor one inverter, selected from the first and second inverters, different from the one disconnected from the motor during a previous switchover to the first operational mode.

2. The traction drive circuit (10) according to claim 1, wherein the motor (1) comprises a phase assembly comprising one or more phases each comprising coils arranged in sequence, and in said first operational mode (OP1) said phases are connected to form a wye point and in said second operational mode (OP2), said phases are open-ended.

3. The traction drive circuit (10) according to claim 1 or 2, wherein the control block (20) is adapted, if the current operational mode is the first mode (OP1) and said voltage value (V) is greater than said threshold (V_{L}), to command the switching block (15) to switch from the first mode to the second mode (OP2).

4. The traction drive circuit (10) according to any of the preceding claims, wherein the control block (20) is adapted, if the current operational mode is the second mode (OP2) and said voltage value (V) is greater than said threshold (V_{L}), to command the switching block (15) to switch from the second mode to the first mode.

5. The traction drive circuit (10) according to any of the preceding claims, wherein first, second and third phases of the motor (1) are connected to the second inverter (13), and the switching block comprises at least two switches (S3, S4) adapted, in the first mode, to be closed and to connect together the first phase of the motor and the second phase of the motor, respectively the second phase and the third phase of the motor, and wherein, in the second operational mode (OP2), said switches are adapted to be opened and disconnect the first phase from the second phase, respectively the second phase from the third phase.

6. A method for controlling a traction drive circuit comprising a motor (1), a dual inverter module (12, 13) comprising a first inverter (12) and a second inverter (13), said method comprising a step of supplying a voltage (V) from the dual inverter module to power the motor;
said method being **characterised in that** it comprises the steps, implemented by an electronic device for controlling the drive circuit, of:
- determining the current value of the voltage to be supplied by the dual inverter module,
- comparing the current value of said voltage with a threshold (V_{L}),
- commanding, depending on the comparison, the current operational mode to switch from a first (OP1) or second (OP2) operational mode
to the other of the first and second operational modes; wherein
in the first operational mode (OP1) of the drive circuit, one of the first and second inverters (13) is disconnected from the motor, and the other of the first and second inverters (12) is connected to the motor (1) adapted to then form a wye point; and
in the second operational mode (OP2) of the drive circuit, the first inverter and the second inverter are connected to the motor then adapted to operate as an open-ended motor, the phases of the motor being disconnected from each other;
wherein, upon each new switchover to the first operational mode (OP1), the switching unit is able to disconnect from the motor one inverter, selected from the first and second inverters, different from the one disconnected from the motor during a previous switchover to the first operational mode.

7. The method for controlling a traction drive circuit according to claim 6, wherein the motor (1) comprises a phase assembly comprising one or more phases each comprising windings arranged in series, and comprising the following steps:
- in said first operational mode, connecting said phases in a wye point; and
- in the second mode, said phases are arranged as open ends.

8. The method for controlling a traction drive circuit according to claim 6 or 7, whereby, if the current operational mode is the first mode (OP1) and said voltage value (V) is greater than said threshold (V_{L}), a command to switch from the first mode to the second mode (OP2) is triggered.

9. The method for controlling a traction drive circuit according to one of the claims 6 to 8, whereby, if the current operational mode is the second mode (OP2) and said voltage value (V) is less than said threshold (V_{L}), a command to switch from the second mode to the first mode is triggered.
